# EUROPEAN PATENT SPECIFICATION

(11) **EP 1 245 140 B1**
(45) Date of publication and mention of the grant of the patent: **06.07.2005**
(21) Application number: 01302840.2
(22) Date of filing: 27.03.2001
(51) Int. Cl.: A01C 1/04

(54) **A sowing method of the plant seeds and the sowing materials used thereof**
Verfahren für die Aussaat von Pflanzensamen und hierzu verwendetes Aussaatmaterial
Méthode de semis de graines de plantes et les matériaux de semis utilisés à cet effet

(43) Date of publication of application: 02.10.2002
(73) Proprietor: Yuen Foong Yu Paper MFG Company, Limited, Taipei, Taiwan (TW)
(72) Inventor: Hsieh, Shih-Pan-Yu, Taichung, Taiwan (TW); Huang, Rui-Zhi, Taoyuan, Taiwan 335, ROC (TW)
(74) Representative: Stuttard, Garry Philip

(56) References cited:
- WO-A-00/67549
- WO-A-94/22287
- DE-U- 9 413 194
- GB-A- 2 328 600

## Description

The present invention is related to a sowing method of the plant seeds and the sowing materials used thereof, and particularly to a sowing method of the plant seeds inlayed in a weed-growth-preventing mulching paper and a weed-growth-preventing mulching paper used thereof.

### BACKGROUND OF THE INVENTION

Generally, the agricultural production comprises the steps of land-preparation, sowing, fertilization, hand weeding and harvest. Each step requires a huge amount of men power. Particularly, the step of hand weeding especially requires a huge amount of men power which always delays the organic farming for a period of time. To proceed the step of weed-removal, the farmers conventionally cover the black plastic film over the land for preventing the weeds from growing. However, after the crops are harvested, the farmers don't know how to deal with the useless black plastic film. Besides, because the black plastic film can't be decomposed naturally, it thus tends to result in environmental pollution once the black plastic film is discarded. Therefore, nowadays, a new method of agricultural production for satisfying the requirement of weed-removal and preventing from resulting in the problem of environmental pollution attracts a large number of researchers' attention.

### SUMMARY OF THE INVENTION

An object of the present invention is to provide a sowing method for increasing the emergence rate of the plant seeds.

Another object of the present invention is to provide a sowing method for increasing the production amount of the crops.

A further object of the present invention is to provide a method for simultaneously proceeding the steps of sowing, soil-covering and weed-removal for agricultural production.

In a first aspect, the present invention is related to a sowing method for plant seeds according to claim 1.

The base comprises light-blocking material for preventing the weeds from growing and is selected from a group consisting of a mulching paper, a fabric, a fiber and a polymer with natural decomposing ability. Preferably, the base is a thin layer having a thickness ranged from 0.2 mm to 0.3 mm.

Each of the plural concavities is arranged in the base with a specific interval of distance to adjacent one for effectively increasing the uniformity of nutrition absorption and the usage of growth space of the plant seeds.

The securing layer is one of a toilet paper and a paper-made towel and is attached to the base plate for fixing the plant seeds by using an adhesive material.

The adhesive material is glue adapted to uniformly spray glue on the base for attaching the securing layer to the base to fix the plant seeds.

The plant seeds are selected from a group consisting of the seeds of a cereal, a vegetable, a flower, a forest and a fruit.

In a second aspect, the present invention is related to a sowing material for sowing plant seeds.

The base comprises light-blocking material for preventing the weeds from growing and is selected from a group consisting of a mulching paper, a fabric, a fiber and a polymer with natural decomposing ability. Preferably, the base is a thin layer having a thickness ranged from 0.2 mm to 0.3 mm.

### DETAILED DESCRIPTION OF THE PREFERRED EMBODIMENTS

The present invention is directed to a sowing method of the plant seeds and the sowing materials used thereof. The sowing method comprises the steps of a) providing a base with water-absorbing ability and humidity-maintaining ability, wherein the base includes a plurality of concavities, b) inlaying the plant seeds in the plural concavities of the base, and c) covering a cultivating material with the base, wherein each concavity has a void thereon for allowing a radicle of a corresponding plant seed to pierce therethrough and be rooted in the cultivating material while the corresponding plant seed is germinating. The base comprises light-blocking material for preventing the weeds from growing and is selected from a group consisting of a mulching paper, a fabric, a fiber and a polymer with natural decomposing ability. Preferably, the base is a thin layer having a thickness ranged from 0.2 mm to 0.3 mm.

The present invention may best be understood by the following example which uses a mulching paper as a base.

First of all, a number of sites of the mulching paper is pressed thereon with a specific interval of distance to adjacent one for forming a plurality of concavities. Each concavity has a void thereon for allowing a radicle of a corresponding plant seed to pierce therethrough and be rooted in the soil. Thereafter, the plant seeds are inlaid in the plural concavities respectively. Finally, glue is used to be uniformly sprayed on the mulching paper for attaching the securing layer, the toilet paper (made by YUEN FOONG YU PAPER MFG CO., LTD), to the mulching paper.

The toilet paper used herein is for fixing the plant seeds, achieving the objective of soil-covering and inducing the radicles of the plant seeds to be rooted in the soil for absorbing water. Because the mulching paper used herein can prevent the weeds from growing, thus the application of herbicides to control weeds is unnecessary, and the environmental pollution can be avoided. Besides, because of good water-absorbing ability and humidity-maintaining ability of the mulching paper, adequate irrigation and fertilization will expectably increase the germination percentage of the plant seeds as long as the mulching paper is well attached to the surface of soil. In addition, the plural concavities arranged in the mulching paper with a specific interval of distance to adjacent one can not only spread the plants out uniformly but also increase the uniformity of nutrition absorption and the usage of growth space of the plants. Accordingly, the present invention provides a method for simultaneously proceeding the steps of sowing, soil-covering and weed control for agricultural production, and thus the cost is lowered.

As we know, while the mulching paper is spread on the surface of soil in the field, an amount of soil is usually placed on the edge of the mulching for preventing the mulching paper from being blew up or off by the wind. However, the edge of the mulching paper is easily to be torn up by the wind. For obviating this problem, the edge of the mulching paper can be folded back to increase the strength of the edge of the mulching paper.

### Experiment

At first, the punching-plates are prepared in advance. Then, the punching-plates are immobilized onto the mulching papers (58 x 16 cm) for punching concavities in the mulching papers by the nails. For one mulching paper, the interval of distance for the punched concavities is 2 cm, and 244 concavities are formed. Then inlaying 244 water convolvulus seeds and cabbage seeds in the concavities of the mulching papers respectively. After the glue is sprayed uniformly on the mulching papers, the toilet paper and the paper-made towel are respectively attached to the mulching papers for securing the plant seeds. Thereafter, they are air-dried naturally, and the combination of the plant seeds with the mulching paper is accomplished. Finally, the cultivation boxes (60 x 17 x 20 cm) including cultivating soil are covered with the mulching papers. On the other hand, another group of direct sowing, i.e. the prior art, is prepared for comparison. After these groups are cultivated in the green-house for 21 days, the emergence percentage of the plant seeds, the fresh weigh of the plant, the number of the plant and the weed-controlling capability are shown in Table 1 and Table 2.

From Table 1, there are a lot of differences of the emergence percentage of the plant seeds, the fresh weigh of the plant, the number of the plant and the weed-controlling capability between the present invention and the prior art. The weed amount is 0.50 according to the present invention, while which is 32.75 according to the prior art. Besides, the weed-controlling capability is 98.47% according to the present invention, which is much better than that according to the prior art.

From Table 2, there are as well a lot of differences of the emergence percentage of the plant seeds, the fresh weigh of the plant, the number of the plant and the weed-controlling capability between the present invention and the prior art. The weed amount is 1.67 according to the present invention, while which is 46.33 according to the prior art. Besides, the weed-controlling capability is 96.40% according to the present invention, which is as well much better than that according to the prior art.

In conclusion, the emergence percentage of the plant seeds, the fresh weigh of the plant, the number of the plant and the weed-controlling capability according to the present invention are much better than those according to the prior art. The present invention provides a sowing method for simultaneously proceeding the steps of sowing, soil-covering and weed-removal for agricultural production, and time and thus the cost is lowered. Moreover, besides the mulching paper, other kinds of materials, such as the fabric, the fiber and the polymer with natural decomposing ability, can also be used as the base with good water-absorbing ability and humidity-maintaining ability.

**Table 1**

| The cultivation of the water convolvulus. | | | | | |
|---|---|---|---|---|---|
| Cultivation results | Water convolvulus¹ | | | Weed amount (g) | Weed-controlling capability (%) |
| | Emergence percentage (%) | Fresh weight (g) | Number | | |
| Present invention | 74.83a³ | 287.50a | 271.50a | 0.50b | 98.47 |
| Prior art | 9.95b | 145.25b | 79.75b | 32.75a | 0.00 |

| | | | | | |
|---|---|---|---|---|---|
| 1. The counted area is 0.10 square meter. 2. All the data shown are average number of four specimen. | | | | | |
| 3. According to Duncan's multiple range test, p=0.05. | | | | | |

**Table 2**

| The cultivation of the cabbage. | | | | | |
|---|---|---|---|---|---|
| Cultivation results | Cabbage¹ | | | Weed amount (g) | Weed-controlling capability (%) |
| | Emergence percentage (%) | Fresh weight (g) | Number | | |
| Present invention | 90.0a³ | 430.00a | 201.67a | 1.67b | 96.40 |
| Prior art | 75.44b | 211.67b | 126.00b | 46.33a | 0.00 |

| | | | | | |
|---|---|---|---|---|---|
| 1. The counted area is 0.0928 square meter. 2. All the data shown are average number of four specimen. | | | | | |
| 3. According to Duncan's multiple range test, p=0.05. | | | | | |

## Claims

1. A sowing method for plant seeds comprising the steps of:
a) providing a light-blocking base with water-absorbing ability and humidity-maintaining ability, wherein the light-blocking base is pressed to form plural concavities thereon;
b) inlaying the plant seeds in the plural concavities of the light-blocking base and using a securing layer to cover the plural concavities whereby to fix the plant seeds in the plural concavities, and
c) covering a cultivating material with the light-blocking base,
wherein each concavity has a void thereon for allowing a radicle of a corresponding plant seed to pierce therethrough and be rooted in the cultivating material while the corresponding plant seed is germinating, and the plural concavities are covered with the securing layer so as to induce the radicles of the plant seeds to be rooted in the cultivating material and increase water-absorbing ability of the radicle of the plant seed.

2. The method according to claim 1, **characterized in that** the light-blocking base is used for preventing the weeds from growing.

3. The method according to claim 2, **characterized in that** the light-blocking base is selected from a group consisting of a mulching paper, a fabric, a fiber and a polymer with natural decomposing ability.

4. The method according to claim 1, **characterized in that** the light-blocking base is a thin layer having a thickness ranged from 0.2 mm to 0.3 mm.

5. The method according to claim 1, **characterized in that** each of the plural concavities is arranged in the light-blocking base with a specific interval of distance to adjacent one for effectively increasing the uniformity of nutrition absorption and the usage of growth space of the plant seeds.

6. The method according to claim 1, **characterized in that** the securing layer is one of a toilet paper and a paper-made towel for increasing the water-absorbing ability of the radicle of the plant seed

7. The method according to claim 1, **characterized in that** the securing layer is attached to the light-blocking base for securing the plant seeds by using an adhesive material.

8. The method according to claim 7, **characterized in that** the adhesive material is glue adapted to uniformly spray glue on the light-blocking base for attaching the securing layer to the light-blocking base to fix the plant seeds.

9. The method according to claim 1, **characterized in that** the plant seeds are selected from a group consisting of the seed group of a cereal, a vegetable, a flower, a forest and a fruit.

10. A sowing material for sowing plant seeds, **characterized in that** the sowing material includes:
a light-blocking base with water-absorbing ability and humidity-maintaining ability covered with a cultivating material for preventing the weeds from growing, pressed to form a plurality of concavities thereon for allowing the plant seeds to be inlaid therein, wherein each concavity has a void thereon for allowing a radicle of a corresponding plant seed to pierce therethrough and be rooted in the cultivating material while the corresponding plant seed is germinating; and
a securing layer covering the plurality of concavities to fix the plant seeds in the plurality of concavities so as to induce the radicles of the plant seeds to be rooted in the cultivating material and increase water-absorbing abitity of the radicles of the plant seed.

11. The sowing material according to claim 10, **characterized in that** the light-blocking base is selected from a group consisting of a mulching paper, a fabric, a fiber and a polymer with natural decomposing ability.

12. The sowing material according to claim 10, **characterized in that** the light-blocking base is a thin layer having a thickness ranged from 0.2 mm to 0.3 mm.

## Patentansprüche

1. Verfahren zur Aussaat von Pflanzensamen, welches die folgenden Schritte umfasst:
a) Bereitstellung eines lichtblockierenden Grundmaterials mit Fähigkeit zur Wasseraufnahme und Aufrechterhaltung von Feuchtigkeit, wobei das lichtblockierende Grundmaterial gepresst wird, um mehrfache Konkavitäten darauf zu bilden;
b) Einlegen der Pflanzensamen in die mehrfachen Konkavitäten des lichtblockierenden Grundmaterials und Verwendung einer Befestigungsschicht zur Abdeckung der mehrfachen Konkavitaten, um **dadurch** die Pflanzensamen in den mehrfachen Konkavitäten zu befestigen; und
c) Bedecken eines Anbaumaterials mit dem lichtblockierenden Grundmaterial,
wobei jede Konkavität eine Lücke auf derselben aufweist, um zu ermöglichen, dass eine Keimwurzel eines entsprechenden Pflanzensamens dieselbe durchstößt und in dem Anbaumaterial verwurzelt ist, während der entsprechende Pflanzensamen keimt, und wobei die mehrfachen Konkavitäten mit der Befestigungsschicht so bedeckt werden, um die Pflanzensamenkeimwurzeln zu veranlassen, in dem Anbaumaterial verwurzelt zu sein, und dass sie die Wasseraufnahmefähigkeit der Pflanzensamenkeimwurzel erhöhen.

2. Verfahren nach Anspruch 1, **dadurch gekennzeichnet, dass** das lichtblockierende Grundmaterial zur Verhinderung von Unkrautwachstum verwendet wird.

3. Verfahren nach Anspruch 2, **dadurch gekennzeichnet, dass** das lichtblockierende Grundmaterial aus einer Gruppe bestehend aus einem Mulchpapier, einem Gewebe, einer Faser und einem Polymer mit natürlicher Zersetzbarkeit ausgewählt ist.

4. Verfahren nach Anspruch 1, **dadurch gekennzeichnet, dass** das lichtblockierende Grundmaterial eine dünne Schicht ist, welche eine Dicke im Bereich von 0.2 mm bis 0.3 mm aufweist.

5. Verfahren nach Anspruch 1, **dadurch gekennzeichnet, dass** jede der mehrfachen Konkavitäten in dem lichtblockierenden Grundmaterial mit einem bestimmten Abstandsintervall zur benachbarten Konkavität angeordnet ist, um die Gleichförmigkeit der Nährstoffaufnahme und die Nutzung des Wachstumsraums der Pflanzensamen wirksam zu erhöhen.

6. Verfahren nach Anspruch 1, **dadurch gekennzeichnet, dass** die Befestigungsschicht eine Befestigungsschicht aus Toilettenpapier oder aus einem Papierhandtuch ist, um die Wasseraufnahmefähigkeit der Pflanzensamenkeimwurzel zu erhöhen.

7. Verfahren nach Anspruch 1, **dadurch gekennzeichnet, dass** zur Befestigung der Pflanzensamen die Befestigungsschicht an dem lichtblockierenden Grundmaterial durch Verwendung eines Haftmaterials befestigt wird.

8. Verfahren nach Anspruch 7, **dadurch gekennzeichnet, dass** das Haftmaterial ein Klebstoff ist, welcher dazu geeignet ist, dass der Klebstoff zur Befestigung der Befestigungsschicht an dem lichtblockierenden Grundmaterial gleichförmig auf das lichtblockierende Grundmaterial gesprüht wird, um die Pflanzensamen zu befestigen.

9. Verfahren nach Anspruch 1, **dadurch gekennzeichnet, dass** die Pflanzensamen aus einer Gruppe bestehend aus der Samengruppe eines Getreides, eines Gemüses, einer Blume, eines Waldes und eines Obstes ausgewählt sind.

10. Aussaatmaterial zur Aussaat von Pflanzensamen, **dadurch gekennzeichnet, dass** das Aussaatmaterial umfasst:
ein lichtblockierendes Grundmaterial mit der Fähigkeit zur Wasseraufnahme und Aufrechterhaltung von Feuchtigkeit bedeckt mit einem Anbaumaterial zur Verhinderung von Unkrautwachstum, welches gepresst ist, um eine Mehrzahl von Konkavitäten darauf zu bilden, um zu ermöglichen, dass die Pflanzensamen in dieselben eingelegt werden, wobei jede Konkavität eine Lücke auf derselben aufweist, um zu ermöglichen, dass eine Keimwurzel eines entsprechenden Pflanzensamens dieselbe durchstößt und in dem Anbaumaterial verwurzelt ist, während der entsprechende Pflanzensamen keimt; und
eine Befestigungsschicht, welche die Mehrzahl von Konkavitäten zur Befestigung der Pflanzensamen in der Mehrzahl von Konkavitäten so bedeckt, dass sie die Pflanzensamenkeimwurzeln veranlasst, in dem Anbaumaterial verwurzelt zu sein, und dass sie die Wasseraufnahmefähigkeit der Pflanzensamenkeimwurzeln erhöht.

11. Aussaatmaterial nach Anspruch 10, **dadurch gekennzeichnet, dass** das lichtblockierende Grundmaterial aus einer Gruppe bestehend aus einem Mulchpapier, einem Gewebe, einer Faser und einem Polymer mit natürlicher Zersetzbarkeit ausgewählt ist.

12. Aussaatmaterial nach Anspruch 10, **dadurch gekennzeichnet, dass** das lichtblockierende Grundmaterial eine dünne Schicht ist, welche eine Dicke im Bereich von 0.2 mm bis 0.3 mm aufweist.

## Revendications

1. Procédé de semis destiné à des graines de plantes comprenant les étapes consistant à :
a) fournir une base opaque dotée d'une capacité d'absorption de l'eau et d'une capacité de maintien de l'humidité, dans lequel la base opaque est pressée afin de former des concavités sur cette dernière ;
b) incruster les graines de plantes dans la pluralité de concavités de la base opaque et utiliser une couche de protection afin de couvrir la pluralité de concavités fixant ainsi les graines de plantes dans les multiples concavités, et
c) couvrir un matériau de culture avec la base opaque,
dans lequel chacune des concavités dispose d'un pore destiné à permettre à un radicule d'une graine de plante correspondante de transpercer cette dernière et être enraciné dans le matériau de culture lorsque la graine de plante correspondante est en germination, et la pluralité de concavités sont recouvertes de la couche de protection de façon à entraîner les radicules des graines de plantes à être enracinés dans le matériau de culture et augmenter une capacité d'absorption d'eau du radicule de la graine de plante.

2. Procédé selon la revendication 1, **caractérisé en ce que** la base opaque est utilisée afin d'empêcher les mauvaises herbes de croître.

3. Procédé selon la revendication 2, **caractérisé en ce que** la base opaque est choisie parmi un groupe composé d'un papier de paillage, d'un tissu, d'une fibre et d'un polymère doté d'une capacité de décomposition naturelle.

4. Procédé selon la revendication 1, **caractérisé en ce que** la base opaque est une couche fine présentant une épaisseur comprise entre 0,2 mm et 0,3 mm.

5. Procédé selon la revendication 1, **caractérisé en ce que** chacune des pluralités de concavités est disposée dans la base opaque suivant un intervalle de distance spécifique par rapport à la concavité contiguë, afin d'augmenter efficacement l'uniformité d'absorption nutritionnelle et l'utilisation d'espace de croissance des graines de plantes.

6. Procédé selon la revendication 1, **caractérisé en ce que** la couche protectrice est constituée de papier hygiénique et de serviettes en papier afin d'augmenter la capacité d'absorption d'eau du radicule de la graine de plante.

7. Procédé selon la revendication 1, **caractérisé en ce que** la couche de protection est attachée à la base opaque afin de fixer les graines de plantes en utilisant un matériau adhésif.

8. Procédé selon la revendication 7, **caractérisé en ce que** le matériau adhésif est une colle adaptée afin de pulvériser une colle de manière uniforme sur la base opaque destinée à attacher la couche de protection sur la base opaque afin de fixer les graines de plantes.

9. Procédé selon la revendication 1, **caractérisé en ce que** les graines de plantes sont choisies parmi un groupe constitué du groupe de graines composées d'une céréale, d'un légume, d'une fleur, d'une forêt et d'un fruit.

10. Matériau de semis destiné à semer des graines de plantes, **caractérisé en ce que** le matériau de semis comprend :
◆ une base opaque dotée d'une capacité d'absorption d'eau et d'une capacité de maintien d'humidité recouverte d'un matériau de culture destiné à empêcher les mauvaises herbes de croître, pressée afin de former une pluralité de concavités sur cette dernière, afin de permettre aux graines de plantes d'y être incrustées, dans laquelle chaque concavité possède un pore destiné à permettre à un radicule d'une graine de plante correspondante de la transpercer et d'être enraciné dans le matériau de culture lorsque la graine de plante correspondante est en germination ; et
◆ une couche de protection couvrant la pluralité de concavités afin de fixer les graines de plantes dans la pluralité de concavités, afin d'entraîner les radicules des graines de plantes à être enracinés dans le matériau de culture et augmenter une capacité d'absorption d'eau des radicules de la graine de plante.

11. Matériau de semis selon la revendication 10, **caractérisé en ce que** la base opaque est choisie parmi un groupe composé d'un papier de paillage, d'un tissu, d'une fibre et d'un polymère doté d'une capacité de décomposition naturelle.

12. Matériau de semis selon la revendication 10, **caractérisé en ce que** la base opaque est une couche fine ayant une épaisseur comprise entre 0,2 mm et 0,3 mm.
